Europäisches Patentamt

European Patent Office

Office européen des brevets

(19)

(11) **EP 0 477 671 B1**

(12) **EUROPÄISCHE PATENTSCHRIFT**

(45) Veröffentlichungstag und Bekanntmachung des Hinweises auf die Patenterteilung:
**17.07.1996 Patentblatt 1996/29**

(51) Int Cl.6: **C08F 279/02**, C08F 279/04

(21) Anmeldenummer: **91115407.8**

(22) Anmeldetag: **12.09.1991**

(54) **Verfahren zur Herstellung von ABS-Formmassen**

Process for the preparation of ABS moldings

Procédé de préparation de masses à moules d'ABS

(84) Benannte Vertragsstaaten:
**BE DE ES FR GB IT NL**

(30) Priorität: **26.09.1990 DE 4030352**

(43) Veröffentlichungstag der Anmeldung:
**01.04.1992 Patentblatt 1992/14**

(73) Patentinhaber: **BASF Aktiengesellschaft
D-67063 Ludwigshafen (DE)**

(72) Erfinder:
• **Baumgartner, Ehrenfried, Dr.
W-6701 Roedersheim-Gronau (DE)**

• **Hofmann, Juergen
W-6700 Ludwigshafen (DE)**
• **Moors, Rainer, Dr.
W-6703 Limburgerhof (DE)**
• **Schaech, Hansjoerg
W-6700 Ludwigshafen (DE)**

(56) Entgegenhaltungen:
**EP-A- 0 054 141**          **EP-A- 0 352 383**
**US-A- 4 198 383**

**Beschreibung**

Die Erfindung betrifft ein fortlaufend (kontinuierlich) zu betreibendes Verfahren zur Herstellung von schlagzähem Polystyrol (ABS), dessen dispergierte Kautschukpartikel Durchmesser von weniger als 500 nm aufweisen, in Masse- bzw. Lösungspolymerisation in mehr als zwei Reaktionszonen unter Anwendung eines Radikalinititors und gegebenenfalls eines Kettenüberträgers (Reglers).

Auf kontinuierliche Verfahren zur Herstellung von schlagzähem Polystyrol beziehen sich beispielsweise die folgenden Druckschriften:

| | |
|---|---|
| (1) US-A-3 243 481 | (7) EP-A-54 141 |
| (2) US-A-4 252 911 | (8) JP-A-63 199 717 |
| (3) EP-A-103 657 | (9) JP-A-63 207 804 |
| (4) DE-A-3 339 531 | (10) JP-A-63 207 803 |
| (5) EP-A-67 536 | (11) JP-A-54 070 350. |
| (6) US-A-4 410 659 | |

Danach ist die kontinuierliche Herstellung von ABS-Polymerisaten, insbesondere in zwei oder mehr Reaktionszonen aus (1) und (2) bekannt. Sie wird im Temperaturbereich von 80 bis 180°C ausgeführt; in einer anschließenden sog. Entgasung (Entfernung des Lösungsmittels bzw. der Monomerreste) werden auch höhere Temperaturen angewendet.

Ein anderes Verfahren zur Herstellung von ABS-Polymerisaten ist die Emulsionspolymerisation; auf diese wird hier nicht näher eingegangen.

Die mechanischen Eigenschaften der in Masse oder Lösung polymerisierten und der in Emulsion hergestellten ABS-Formmassen gleichen sich weitgehend. vorteile bei der Masse- oder Lösungspolymerisaten sind vor allem die niedrigeren Herstellkosten (u.a. höhere Kautschukeffektivität, kein Abwasser) und die hellere, weniger Pigmente zur Einfärbung verbrauchende Eigenfarbe der Produkte. Nachteilig ist aber im Vergleich zum Ergebnis der Emulsionspolymerisation ein geringerer Oberflächenglanz, weil das in Masse oder Lösung polymerisierte ABS verhältnismäßig große dispergierte Kautschukpartikel besitzt. Es hat daher eine Reihe von Versuchen gegeben, diesen Mangel durch entsprechende Verfahrensänderungen auszugleichen und ABS in Masse- oder Lösungspolymerisation so herzustellen, daß kleine Kautschukpartikel erhalten werden.

In (3) ist eine Formmasse aus einer Hartmatrix und einer Weichphase mit einem Kautschukpartikeldurchmesser von unter 1,5 μm beschrieben. Es sollen nur Kautschuke mit einer Lösungsviskosität (5 %ig in Styrol) von mindestens 120 cP für die beanspruchten Produkte in Frage kommen. ABS-Massen mit Kautschukpartikeln von 0,5 μm oder weniger, die für einen dem Emulsions-ABS ebenbürtigen Glanz notwendig sind, werden danach nicht erhalten.

Aus (4) läßt sich der Hinweis ermitteln, daß bei einem kontinuierlichen Verfahren zur Herstellung von Masse- oder Lösungs-ABS u.a. die Kautschukkonzentration unter 12 Gew.% gehalten werden muß, um ein ABS mit kleinen Kautschukpartikeln zu erzeugen. Produkte mit einem Kautschukgehalt von unter 12 Gew.% und einer maximalen Teilchengröße von 0,5 μm haben aber eine für die Praxis ungenügende Kerbschlagzähigkeit.

In (5) ist eine Masse-Suspensionspolymerisation für ein ABS-Polymerisat zur Herstellung von Mischungen mit Polyestern beschrieben. Für den ABS-Bestandteil sollen Teilchengrößen von 500 bis 2000 nm erzielt werden. Durch Anwendung hoher Initiatorkonzentrationen (vgl. Beispiel 1) erhält man Kautschukpartikel mit einem Durchmesser von weniger als 1000 nm. Abgesehen davon, daß der Oberflächenglanz solcher ABS-Produkte nicht mit den in Emulsion hergestellten Formmassen vergleichbar ist (diese haben z.B. Kautschukpartikeldurchmesser von unter 500 nm), läßt sich dieses Verfahren nicht auf eine kontinuierliche Lösungspolymerisation anwenden, da die hohe Reaktionsgeschwindigkeit bei höherem Umsatz zu Anbackungen in den Reaktoren führt.

In (6) wird eine kontinuierliche Masse-Polymerisation in einem Extruder unter Einsatz großer Mengen Acrylnitril beschrieben, die ABS-Produkte mit einem Kautschukpartikeldurchmesser von 10 bis 500 nm liefert. Aufgrund des großen überschusses an Acrylnitril wird der Kautschuk quasi gefällt; die entstehenden Kautschukpartikel besitzen keine Hartmatrixeinschlüsse, was zu den schon erwähnten Nachteilen führt. Außerdem ist eine Polymerisation in einem Extruder eine für die Großtechnik extrem teure Technologie.

Der Einsatz von Kautschuk mit extrem niedriger Lösungsviskositat (8) in einer Lösungspolymerisation ergibt immerhin Kautschukpartikel mit einem maximalen Durchmesser von 750 nm. Der Oberflächenglanz eines solchermaßen erzeugten ABS kann aber nicht mit einem in Emulsionspolymerisation erzeugten ABS konkurrieren, dafür sind die Kautschukpartikel zu groß. Aufgrund des geringen Molekulargewichts des Kautschuks sind die erhaltenen Kautschukpartikel schlecht mit Hartmatrix gefüllt, was zu den bereits geschilderten Nachteilen führt.

Als Schlagzähmodifier für ABS wird in (7) ein "kautschukartiges Polymerisat" mit geringer Lösungsviksosität verwandt. In den Beispielen ist das "kautschukartige Polymerisat" als Styrol-Butadienblockcopolymerisat beschrieben.

Es werden durchschnittlich Kautschukpartikelgrößen von 500 bis 600 nm erhalten. In (9) bis (11) wird ebenfalls der Einsatz von Blockkautschuk zur Herstellung von ABS mit kleinen Kautschukpartikeln beschrieben. Von Nachteil ist aber der hohe Preis des Blockkautschuks, die den Kostenvorteil des Masse- oder Lösungspolymerisationsverfahren wieder zunichte machen.

Aufgabe war es daher, ein Verfahren zu finden, das unter Verwendung von Polybutadien auch in kontinuierlichem Masse- oder Lösungspolymerisationsverfahren zu einem ABS mit kleinen Kautschukpartikeln, d.h. solchen mit einem Durchmesser von weniger als 500 nm und damit zu hochglänzend verarbeitbaren ABS-Formmassen führt.

Unmittelbarer Erfindungsgegenstand ist ein Verfahren zur fortlaufenden (kontinuierlichen) Herstellung von ABS-Polymerisaten durch radikalisch ausgelöste Polymerisation eines Gemisches aus 60 bis 90 Gew.% mindestens eines vinylaromatischen Monomeren und 10 bis 40 Gew.% mindestens eines weiteren ethylenisch ungesättigten Monomeren, in Gegenwart von 5 bis 30 Gew.%, bezogen auf die Summe der Monomeren, Polybutadien einer Lösungsviskosität (5 gew.%ig in Styrol bei 25°C) von 25 bis 95 mPa.s, gegebenenfalls in einem Lösungsmittel, insbesondere Ethylbenzol, in einer Reaktorkaskade aus mindestens 3 im wesentlichen rückvermischungsfrei arbeitenden, gerührten Reaktoren, die wenigstens teilweise innenliegende Kühlrohre zur Abfuhr der Polymerisationswärme aufweisen, bei Reaktionstemperaturen von 50 bis 180°C wobei in einem der Reaktoren Phaseninversion auftritt, dessen wesentliches Merkmal ist, daß die Phaseninversion in einem Ringspaltreaktor stattfindet, der Mittel zur Erzeugung hoher Scherkräfte aufweist.

Ein weiterer Erfindungsgegenstand ist eine Vorrichtung, insbesondere Reaktor zur Durchführung des Verfahrens nach Anspruch 1, zur Erzielung hoher Scherkräfte während der Lösungs- oder Massepolymerisation von insbesondere Styrol und Acrylnitril in Gegenwart eines vorgebildeten Polybutadiens, gekennzeichnet durch die folgenden Merkmale:

- ein im wesentlichen zylindrisch-rohrförmiger Gefäßmantel mit einem Deckel und einem Boden, die jeweils Mittel zur Zu- bzw. Abführung von Reaktionsgemisch und ferner mindestens je ein zentrales Lager zur Aufnahme einer Rührwelle aufweisen,

- einen mit der Rührwelle drehkraftschlüssig verbundenen zylindrischen Innenkörper mit einem Außendurchmesser, der geringfügig kleiner als der Innendurchmesser des Gefäßmantels ist und ferner

- Mitteln zur Zufuhr von Wärmetauscherflüssigkeiten zum Gefäßmantel und Innenkörper.

Das erfindungsgemäße Verfahren wird in einer Anordnung aus mindestens 3 Reaktoren oder Reaktionszonen durchgeführt, bevorzugt wird eine Reaktorkaskade aus 4 Reaktoren. Als Reaktoren werden übliche gerührte Rohrreaktoren (Polymerisationstürme) mit innenliegenden Kühlrohren und einem zwischen die Kühlrohrschichten greifenden Rührer bevorzugt. Mindestens einer der Reaktoren ist jedoch erfindungsgemäß z.B. als sog. Ringspaltreaktor (vgl. Abbildung) aufgebaut, d.h. er weist Mittel zur Erzeugung hoher Scherkräfte auf. Der bevorzugte Ringspaltreaktor kann beliebige Größe haben, die sich nach der beabsichtigten Verweilzeit richtet.

Für Versuchszwecke eignet sich z.B. folgende Anordnung: Das Innere des Reaktors ist zylindrisch mit einer Länge von 1100 mm und einem Durchmesser von 220 mm. In diesem Reaktor ist ein hohler drehbar gelagerter Zylinder als Rührer derart angeordnet, daß zwischen der Reaktorinnenfläche und der Zylinderoberfläche des Rührers ein Spalt von 28,35 mm Weite entsteht. Der Zylinderrührer kann über die Rührerwelle mit Kühlwasser versorgt werden. Das nutzbare Reaktionsvolumen des Ringspaltreaktors beträgt 17,7 l. Ein außenliegender Kühlmantel ist ebenfalls vorgesehen. Der Ringspaltreaktor kann von oben mit einer Kautschuklösung oder einem vorpolymerisierten und vorgepfropften Polymersirup gefüllt und gleichzeitig jeweils getrennt mit Initiatoren oder Molekulargewichtsreglern beschickt werden. Eine am unteren Ausgang des Reaktors angebrachte Zahnradpumpe sorgt für den Durchsatz.

Bevorzugt wird der Ringspaltreaktor so betrieben, daß die Styrol und Acrylnitril enthaltende Kautschuklösung in einem vorgeschalteten Polymerisationsturm bis kurz vor der Phaseninversion unter Zuhilfenahme eines radikalischen Initiators, insbesondere eines bei niedriger Temperatur zerfallenden tert.-Butylperesters, und ohne Zugabe eines Molekulargewichtsreglers polymerisiert und dann unmittelbar in den Ringspaltreaktor gefördert wird, in dem weiter radikalischer Starter und gegebenenfalls ein Molekulargewichtsregler zugesetzt wird. Der Ringspaltreaktor kann auch so betrieben werden, daß Pfropfung und Phaseninversion gemeinsam durchgeführt werden. Der Vorteil eines Ringspaltreaktors gegenüber den bekannten Reaktionstürmen besteht darin, daß er ein konstantes Scherfeld erzeugt. Das gleichmäßigere Scherfeld liefert engere Kautschukteilchengrößenverteilungen. Dies ist zur Herstellung eines hochglänzenden ABS mit kleinen Kautschukpartikeln enger Größenverteilung vorteilhaft.

Wenn vorhanden, wird in der ersten Reaktionszone, einem Polymerisationsturm mit innenliegenden Kühlrohrschichten, die Kautschuklösung aus Polybutadien, Styrol und Acrylnitril, mit tert.-Butylperester als Starter soweit polymerisiert, daß noch keine Phaseninversion stattfindet. Dieses Stadium wird am besten in einem Vorversuch ermittelt und die Reaktionsbedingungen dann eingehalten. Dabei wird das Polybutadien gepfropft. Je höher der Gehalt an Pfropfcopolymeren ist, desto besser ist die emulgierende Wirkung, d.h. desto kleiner werden die dispergierten Kautschukpartikel. Im Ringspaltreaktor, der zweiten Reaktionszone, wird bis zum Überschreiten der Phaseninversion unter Zuhilfenahme von tert.-Butylperester als Starter und gegebenenfalls Mercaptanen als Regler polymerisiert. Der innenliegende Zylinder wird mit etwa 20 bis 200 Umdrehungen pro Minute gedreht. Bevorzugte Rührgeschwindigkeit ist 50 bis 120 Umdrehungen pro Minute.

Nachgeschaltet sind z.B. zwei weitere Polymerisationstürme (3 und 4), in denen die thermische Polymerisation der Poly-Styrol-Acrylnitril-Matrix bis zu einem Feststoffgehalt von wenigstens 50 %, bevorzugt aber mindestens 65 Gew.%, stattfindet. Nach dem vierten Polymerisationsturm wird die Polymerschmelze entgast und nach dem Abkühlen in üblicher Weise granuliert.

Das Verfahren ist besonders zur Herstellung von ABS-Formmassen im eigentlichen Sinne, also unter Verwendung von Styrol und Acrylnitril im Verhältnis von z.B. 90/10 bis 60/40 gedacht. Andere Monomere wie z.B. $\alpha$-Methylstyrol, o-, m-, p-Methylstyrol, tert.-Butylstyrol einerseits und Methacrylnitril andererseits können unter den bekannten Voraussetzungen ebenfalls verwendet werden.

Aus Gründen der Klarheit und Einfachheit wird im folgenden i. a. von Styrol, Acrylnitril und Polybutadien gesprochen, auch wenn deren Äquivalente gemeint sind.

Für das Verfahren kommen als Monomere Styrol und Acrylnitril im Verhältnis von 90/10 bis 60/40 in Frage. Äquivalente Monomere wie $\alpha$-Methylstyrol, o-, m-, p-Methylstyrol, tert.-Butylstyrol bzw. Methacrylnitril können in bekannter Weise anstelle oder zusammen mit Styrol bzw. Acrylnitril verwendet werden.

Als Kautschuk ist Polybutadien vom Medium- oder High-cis-Typ mit einem Molekulargewicht von 70 000 bis 350 000 (Gewichtsmittel) besonders geeignet. Grundsätzlich ist das Verfahren aber auch auf Blockkautschuke z.B. vom Styrol-Butadientyp anwendbar. Der Kautschuk wird in einer Menge von 5 bis 30 Gew.-%, bezogen auf die Monomeren, eingesetzt.

Geeignete Radikalinitiatoren sind pfropfaktive Peroxide. Besonders bevorzugt sind Dibenzoylperoxid, tert.-Butylperoctoat, tert.-Butylperbenzoat, tert.-Butylperpivalat und tert.-Butylperneodecanoat. Der Initiator wird in einer Menge von 0,01 bis 0,5 Gew.-%, bezogen auf die Monomeren, angewendet, wobei die Mengen jeweils so bemessen werden, daß - unter Berücksichtigung von Temperatur und Zerfallsparametern - die Polymerisation auf jeder Stufe bis zum praktisch vollständigen Verbrauch des Initiators abläuft.

Als Kettenüberträger (Regler) kommen die üblicherweise verwendeten Mercaptane mit 4 bis 18 C-Atomen in Betracht. Es haben sich besonders das n-Butylmercaptan, das n-Octylmercaptan sowie das n- oder t.-Dodecylmercaptan bewährt. Die Menge an Mercaptan, falls angewendet, beträgt in der Regel 0,01 bis 0,3 Gew.-%, bezogen auf die Monomeren.

Als Lösungsmittel für das erfindungsgemäße Verfahren können sowohl polare, wie unpolare Verbindungen oder Mischungen aus diesen verwendet werden.

Falls die Polymerisation in Lösung durchgeführt wird, kommt als geeignetes Lösungsmittel Toluol, Xylol, Ethylbenzol, Methylethylketon oder Tetrahydrofuran in Frage. Es werden in einer Menge von z.B. 2 bis 25 Gew.%, bezogen auf vinylaromatisches Monomeres angewendet. Besonders bevorzugt für das erfindungsgemäße Verfahren wird Ethylbenzol.

Während der Polymerisation, insbesondere nach Herstellung der Lösung des Kautschuks oder vor der Verarbeitung der nach dem erfindungsgemäßen Verfahren erhaltenen schlagfesten Polymerisate können übliche Zusatzstoffe, wie innere Gleitmittel, Antioxidantien oder UV-Stabilisatoren, sowie Schmiermittel und Füllstoffe dem Reaktionsansatz in üblichen, dem Fachmann bekannten Mengen, zugesetzt werden.

Der vorteil des erfindungsgemäßen Verfahrens besteht darin, daß ein hoher Pfropfgrad des Kautschuks und eine hohe Pfropfausbeute erzielt werden, ohne daß es zu Schwierigkeiten in der Wärmeabfuhr, zu Kesselanwachsungen oder zu vorzeitigen Vernetzungen kommt. Ein weiterer Vorteil besteht darin, daß sich gezielt mit ein und demselben Kautschuk je nach Reaktionsführung Produkte mit hoher Schlagzähigkeit oder mit guter Transluzenz herstellen lassen.

Nach dem erfindungsgemäßen verfahren können schlagzähe ABS-Polymerisate mit Teilchengrößen eines Durchmessers von unter 500 nm erhalten werden.

Die nach dem erfindungsgemäßen Verfahren erhaltenen Formmassen können in üblicher Weise thermoplastisch verarbeitet werden, also z.B. durch Extrudieren, Spritzgießen, Kalandrieren, Hohlkörperblasen, Pressen oder Sintern; bevorzugt werden durch Spritzgießen Formteile hergestellt.

Die in den nachstehenden Beispielen und Vergleichsversuchen verwendeten stofflichen Kennwerte wurden wie folgt bestimmt:

- Die Lösungsviskosität, LV, des Kautschuks wird in einer 5 gew.-%igen Lösung in Styrol bei 25°C gemessen.

- Die mittlere Teilchengröße wird durch Auswertung elektronenmikroskopischer Aufnahmen ermittelt.

- Die mittlere Teilchengröße wird als $d_{50}$-Wert (Gewichtsmittel) angegeben. Die Teilchengrößenverteilung wird als Verteilungsspanne

$$\text{Spanne} = \frac{d_{90} - d_{10}}{d_{50}}$$

charakterisiert. Ein kleiner Zahlenwert spiegelt eine enge Teilchengrößenverteilung wieder.

- Die Viskositätszahl der Polystyrolacrylnitrilmatrix wurde nach der Trennung von der Kautschukphase als 0,5 %ige Lösung in Dimethylformamid gemessen.

- Der Oberflächenglanz wurde mit einem Dr. Lange Labor-Reflektometer nach DIN 67 530 an den Seitenflächen von spritzgegossenen Testkästchen gemessen. Abweichend von DIN 67 530 wurde der Meßwinkel auf 55,8° eingestellt. Die Testkästchen haben eine Länge von 11 cm, eine Breite von 4,3 cm und eine Höhe von 5 cm. Die Testkästchen wiegen ca. 26,27 g. Die Spritzgießbedingungen zur Herstellung der Testkästchen sind in den Beispielen angegeben.

- Die Kerbschlagzähigkeit wird an bei 230°C spritzgegossenen Formkörpern nach DIN 53 453 gemessen.

Die angegebenen Mengen beziehen sich im allgemeinen auf das Gewicht.

Beispiele

Zum Vergleich wurden im Handel erhältliche ABS-Formmassen, die in Lösungs- oder Massepolymerisation hergestellt wurden, bezüglich ihrer Teilchengröße und Teilchengrößenverteilung (Spanne) vermessen.

Tabelle 1

| Handelssorte | $d_{50}$ [µm] | Spanne |
|---|---|---|
| Magnum 213 | 4,0 | 1,3 |
| Magnum 2030 | 1,9 | 1,4 |
| Magnum 2002 | 1,0 | 1,5 |

Beispiele 1 bis 6

Die Polymerisationsanlage besteht als folgenden Bauteilen:

a) 250 l Kautschuklösebehälter (rührbar)

b) 250 l Vorratsbehälter (rührbar)

c) Ringspaltreaktor wie oben beschrieben
    Der Hohlzylinder des Rührers wird mit Wasser als Kühlmedium beschickt. Die Temperatur des Wassers wird durch eine Kaskadenregelung gesteuert

d) 3 Turmreaktoren (l/d = 1100/220 mm) mit innenliegenden horizontal geführten parallelen Schichten von Kühlrohren und einem zwischen die Kühlrohrschichten greifenden Rührer. Reaktionsvolumen 30 l.

e) Entgasungs- und Granuliereinrichtung

f) Zahnradpumpen als Austragspumpen unter den Reaktoren.

18 kg Kautschuk (Buna HX 500 der Bayer AG mit einer Lösungsviskosität von 90 mPa·s als 5 %ige Lösung in Styrol bei 25°C) werden in 22,5 kg Ethylbenzol, 82,1 kg Styrol und 27,4 kg Acrylnitril unter Rühren innerhalb von 5 Stunden gelöst. Die fertige Kautschuklösung wird in den Vorratsbehälter gepumpt. Aus dem Vorratsbehälter wird die Polymerisationsanlage kontinuierlich mit Kautschuklösung versorgt. Es werden pro Stunde 20 l Kautschuklösung in die Polymerisationsanlage gefördert.

In den beiden ersten Reaktionszonen wird die Polymerisation bei 80°C durch jeweils kontinuierliche Zugabe von tert.-Butylperpivalat durchgeführt. Im ersten Polymerisationsturm wird bis zu einem Feststoffgehalt von 18 Gew.%, in der zweiten Reaktionszone, dem Ringspaltreaktor, bis zu einem Feststoffgehalt von 28 Gew.% polymerisiert. Dazu werden in den ersten Turm 2,1 g/h tert.-Butylperpivalat gegeben und in den Ringspaltreaktor 3,2 g/h. Die Rührgeschwindigkeit wird im ersten Turm bei 150 Umdrehungen pro Minute (Upm) und im Ringspaltreaktor bei 100 Upm gehalten. Auf diese Weise wird der Kautschuk im ersten Turm gepfropft, während die Phaseninversion im Ringspaltreaktor erfolgt. In den beiden nächsten folgenden Reaktionstürmen wird durch thermische Polymerisation die PSAN-Matrix ausgebildet. Im dritten Polymerisationsturm wird bei einer Temperatur von 130°C und einer Rührergeschwindigkeit von 50 Upm ein Feststoffgehalt von 45 Gew.% eingestellt. Im vierten Polymerisationsturm wird durch Polymerisation bei 146°C unter Rühren mit 10 Upm ein Feststoffgehalt von 70 Gew.% erhalten.

Alle vier Reaktionszonen werden vollständig gefüllt betrieben. Tert.-Dodecylmercaptan wird als Molekulargewichtsregler zusätzlich in unterschiedlicher Menge in die ersten drei Reaktionszonen dosiert. Die Angaben der Tabelle 2 zeigen den Einfluß der Reglerzugabe auf die Ausbildung kleiner Kautschukpartikel.

Nach dem vierten Polymerisationsturm wird die Polymerschmelze entgast und nach dem Abkühlen als Strang granuliert. Der Durchsatz an ABS-Formmasse betrug 14 kg/h.

Die in den Beispielen 5 und 6 hergestellten Formmassen genügen nicht mehr den Anforderungen, die in der Praxis an den Oberflächenglanz von spritzgegossenen Fertigteilen gestellt werden.

Ein in Emulsionspolymerisation hergestelltes ABS mit vergleichbarem Kautschukgehalt von 17 % und einer Viskositätszahl der Hartmatrix von 80 ml/g hat folgenden Oberflächenglanz: Bedingung 1: 68 %, Bedingung 2: 47 %.

Ein im Handel erhältliches, in Lösungs- oder Massepolymerisation hergestelltes ABS (Magnum 2030 der Dow Chem.) mit einer Teilchengröße $d_{50}$ = 1,9 µm und einer größeren Teilchengröpenspanne von 1,4 hat einen Oberflächenglanz von 52 % (Bedingung 1) und 18 % (Bedingung 2).

Tabelle 2

| Beispiel | Eindosierte Reglermenge (tert.-Dodecylmercaptan) | | | | Viskositäts-zahl der Matrix | Kautschuk-partikel größe $d_{50}$ | Kautschuk-partikel-spanne | Oberflächen-glanz | | Kerbschlag-zähigkeit | |
|---|---|---|---|---|---|---|---|---|---|---|---|
| | Turm 1 [g/h] | Turm 2 [g/h] | Turm 3 [g/h] | Turm 4 [g/h] | [ml/g] | [nm] | | Bed.1 [%] | Bed.2 [%] | 23°C [kJ/m²] | -40°C [kJ/m²] |
| 1 | – | – | 60 | – | 80 | 0,25 | 0,6 | 72 | 48 | 5 | 5 |
| 2 | – | 18 | 25 | – | 78 | 0,3 | 0,5 | 70 | 46 | 6 | 5 |
| 3 | – | 40 | – | – | 82 | 0,35 | 0,5 | 67 | 39 | 9 | 6 |
| 4 | 5 | 32 | – | – | 83 | 0,4 | 0,5 | 68 | 37 | 8 | 6 |
| 5 | 15 | 18 | – | – | 80 | 0,7 | 0,8 | 62 | 32 | 18 | 9 |
| 6 | 25 | – | – | – | 79 | 2,5 | 1,1 | 57 | 23 | 22 | 13 |

EP 0 477 671 B1

Vergleichsbeispiele 1 bis 6

Der Ringspaltreaktor aus den Beispielen 1 bis 6 wurde durch einen Turmreaktor ersetzt. Es wurde wie in den Beispielen 1 bis 6 mit der gleichen Kautschuklösung unter den angegebenen Bedingungen polymerisiert. In der Tabelle 3 sind die erhaltenen ABS-Formmassen charakterisiert.

Die Teilchengrößenverteilung der dispergierten Kautschukpartikel ist breiter als der in Tabelle 2 gelisteten Produkte. ABS-Formmassen, die in einer 4-Turm-Fahrweise hergestellt wurden, sind Produkten aus einer Anlage mit 4 Reaktionszonen unter Einsatz eines Ringspaltreaktors im Oberflächenglanz unterlegen.

Vergleichsbeispiel 7

Es wurde wie in den Beispielen 1 bis 6 in einer Anlage mit nur drei hintereinandergeschalteten Polymerisationstürmen gearbeitet. Es kam die Kautschuklösung aus den Beispielen 1 bis 6 zum Einsatz. Der Durchsatz betrug ebenfalls 20 l/h. Im ersten Polymerisationsturm wurde bei 80°C unter Verwendung von tert.-Butylperpivalat ohne Zugabe von Molekulargewichtsregler mit einer Rührergeschwindigkeit von 150 Upm bis zu einem Feststoffgehalt von 28 Gew.% polymerisiert; d.h. im ersten Polymerisationsturm fand sowohl die Pfropfung als auch die Phaseninversion statt. In den beiden nachfolgenden Polymerisationstürmen fand wie in den Beispielen 1 bis 6 die Matrixpolymerisation statt. Das Molekulargewicht der Polystyrolacrylnitrilmatrix wurde durch tert.-Dodecylmercaptanzugabe in den zweiten Polymerisationsturm auf eine Viskositätszahl von 80 ml/g eingestellt.

Die Kautschukpartikelgröße der so hergestellten ABS-Formmasse beträgt 0,4 µm mit einer Kautschukpartikel-"spanne" von 1,5 und einem Oberflächenglanz von 66 % (Bed. 1) und 32 % (Bed. 2).

Tabelle 3

| Vergleichs beispiel | Eindosierte Reglermenge (tert.-Dodecylmercaptan) | | | | Viskositäts- zahl der Matrix | Kautschuk- partikel größe $d_{50}$ | Kautschuk- partikel- spanne | Oberflächenglanz | |
|---|---|---|---|---|---|---|---|---|---|
| | Turm 1 [g/h] | Turm 2 [g/h] | Turm 3 [g/h] | Turm 4 [g/h] | [ml/g] | [nm] | | Bed.1 [%] | Bed.2 [%] |
| 1 | – | – | 60 | – | 83 | 0,3 | 1,0 | 70 | 46 |
| 2 | – | 17 | 17 | – | 77 | 0,35 | 1,0 | 68 | 42 |
| 3 | – | 28 | – | – | 80 | 0,4 | 1,0 | 68 | 37 |
| 4 | 5 | 20 | – | – | 81 | 0,5 | 1,1 | 68 | 35 |
| 5 | 15 | 15 | – | – | 80 | 0,8 | 1,1 | 60 | 30 |
| 6 | 25 | – | – | – | 80 | 2,5 | 1,5 | 54 | 15 |

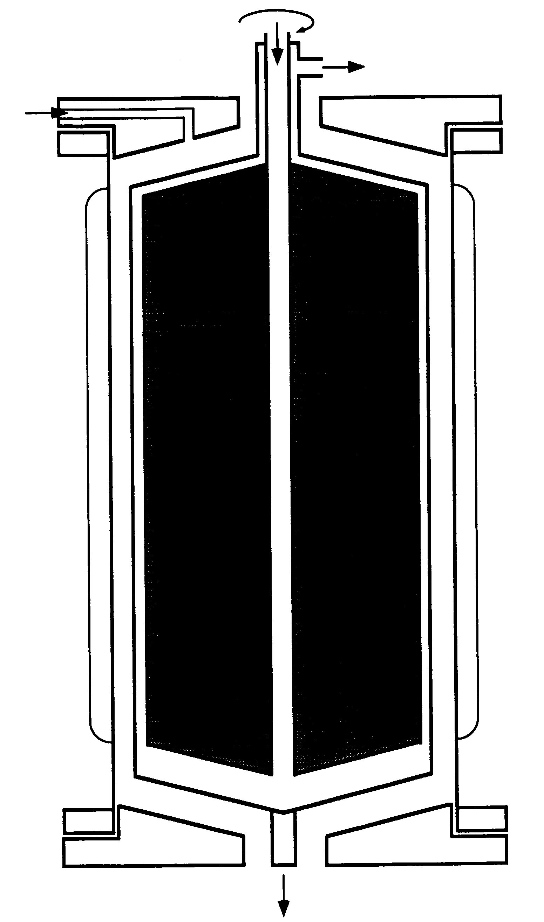

**Patentansprüche**

1. Verfahren zur fortlaufenden (kontinuierlichen) Herstellung von ABS-Polymerisaten durch radikalisch ausgelöste Polymerisation eines Gemisches aus 60 bis 90 Gew.% mindestens eines vinylaromatischen Monomeren und 10 bis 40 Gew.% mindestens eines weiteren ethylenisch ungesättigten Monomeren, in Gegenwart von 5 bis 30 Gew. %, bezogen auf die Summe der Monomeren, Polybutadien einer Lösungsviskosität (5 gew.%ig in Styrol bei 25°C) von 25 bis 95 mPa.s, gegebenenfalls in einem Lösungsmittel, insbesondere Ethylbenzol in einer Reaktorkaskade aus mindestens 3 im wesentlichen rückvermischungsfrei arbeitenden, gerührten Reaktoren, die wenigstens teilweise innenliegende Kühlrohre zur Abfuhr der Polymerisationswärme aufweisen, bei Reaktionstemperaturen von 50 bis 180°C wobei in einem der Reaktoren Phaseninversion auftritt, dadurch gekennzeichnet, daß die Phaseninversion in einem Ringspaltreaktor stattfindet.

2. Verfahren nach Anspruch 1, dadurch gekennzeichnet, daß als vinylaromatisches Monomeres Styrol und als weiteres Monomeres Acrylnitril eingesetzt werden.

3. Vorrichtung, insbesondere Reaktor zur Durchführung des Verfahrens nach Anspruch 1, zur Erzielung hoher Scherkräfte während der Lösungs- oder Massepolymerisation von insbesondere Styrol und Acrylnitril in Gegenwart eines vorgebildeten Polybutadiens, gekennzeichnet durch die folgenden Merkmale:

   - ein im wesentlichen zylindrisch-rohrförmiger Gefäßmantel mit einem Deckel und einem Boden, die jeweils Mittel zur Zu- bzw. Abführung von Reaktionsgemisch und ferner mindestens je ein zentrales Lager zur Aufnahme einer Rührwelle aufweisen,

   - einen mit der Rührwelle drehkraftschlüssig verbundenen zylindrischen Innenkörper mit einem Außendurchmesser, der geringfügig kleiner als der Innendurchmesser des Gefäßmantels ist und ferner

   - Mitteln zur Zufuhr von Wärmetauscherflüssigkeiten zum Gefäßmantel und Innenkörper.

**Claims**

1. A process for the continuous preparation of ABS polymers by free radical-initiated polymerization of a mixture of from 60 to 90 % by weight of at least one vinylaromatic monomer and from 10 to 40 % by weight of at least one further ethylenically unsaturated monomer, in the presence of from 5 to 30 % by weight, based on the total of monomers, of polybutadiene having a solution viscosity (5 % strength by weight in styrene at 25°C) of from 25 to 95 mPa.s, in the presence or absence of a solvent, in particular ethylbenzene, in a reactor cascade comprising at least 3 stirred reactors operating essentially without back-mixing and at least some of which having internal cooling tubes for dissipating the heat of polymerization, at from 50 to 180°C, phase inversion taking place in one of the reactors, wherein the phase inversion takes place in an annular gap reactor.

2. A process as claimed in claim 1, wherein the vinylaromatic monomer is styrene and the further monomer is acrylonitrile.

3. An apparatus, in particular a reactor for carrying out the process as claimed in claim 1, for achieving high shear forces during the solution or bulk polymerization of, in particular, styrene and acrylonitrile in the presence of a preformed polybutadiene, having the following features:

   - an essentially cylindrical/tubular vessel jacket having a lid and a base, each of which has means for feeding a reaction mixture in and out and furthermore at least one central bearing for accommodating a stirrer shaft,
   - a cylindrical inner element which is connected to the stirrer shaft by rotational force and has an external diameter which is slightly smaller than the internal diameter of the vessel jacket, and furthermore
   - means for feeding heat-exchanger fluids to the vessel jacket and the internal element.

**Revendications**

1. Procédé pour la production ininterrompue (continue) de polymères d'ABS par une polymérisation initiée de manière radicalaire d'un mélange constitué de 60 à 90 % en poids d'au moins un monomère vinylaromatique et de 10 à 40 % en poids d'au moins un monomère supplémentaire éthyléniquement insaturé, en présence de 5 à 30 % en poids, par rapport à la somme des monomères, de polybutadiène avec une viscosité en solution (5 % en poids dans le styrène à 25°C) de 25 à 95 mPa.s, éventuellement dans un solvant, en particulier l'éthylbenzène, dans une cascade de réacteurs constituée d'au moins trois réacteurs agités travaillant de manière essentiellement sans rétromélange, qui présentent au moins partiellement des conduites de refroidissement internes pour l'élimination de la chaleur de polymérisation, à des températures de réaction de 50 à 180°C, une inversion de phase se produisant dans un des réacteurs, caractérisé en ce que l'inversion de phase se produit dans un réacteur à passage annulaire.

2. Procédé selon la revendication 1, caractérisé en ce qu'on utilise à titre de monomère vinylaromatique du styrène et à titre de monomère supplémentaire de l'acrylonitrile.

3. Dispositif, en particulier un réacteur pour la réalisation du procédé selon la revendication 1, pour l'obtention de forces de cisaillement élevées pendant la polymérisation en masse ou en solution en particulier de styrène et d'acrylonitrile en présence d'un polybutadiène préformé, caractérisé par les caractéristiques suivantes :

- une enveloppe de récipient de forme essentiellement cylindrique-tubulaire avec un couvercle et un fond, qui présentent respectivement des moyens pour l'alimentation, respectivement l'évacuation du mélange réactionnel et qui présentent en outre respectivement au moins un palier central pour l'admission d'un arbre d'agitation,
- un corps interne cylindrique relié à l'arbre d'agitation de manière à transmettre sa force de rotation, avec un diamètre extérieur qui est légèrement plus petit que le diamètre intérieur de l'enveloppe du récipient et en outre
- des moyens d'alimentation de liquides d'échange calorifique vers l'enveloppe de récipient et le corps interne.